# EUROPEAN PATENT APPLICATION

(11) **EP 4 682 401 A1**
(43) Date of publication of application: **21.01.2026**
(21) Application number: 23927543.1
(22) Date of filing: 16.03.2023
(51) Int. Cl.: F16H 1/32, F16C 27/06

(54) **STRAIN WAVE GEARING**

(71) Applicant: Harmonic Drive Systems Inc., Shinagawa-ku Tokyo 140-0013 (JP)
(72) Inventor: SHIROKOSHI Norio, Azumino-shi, Nagano 399-8305 (JP)
(74) Representative: TBK
(86) International application number: PCT/JP2023/010456
(87) International publication number: WO 2024/189924

(57) **Abstract**

A strain wave gearing (1) comprises: an input shaft (6) connected directly to a cam plate (41) of a wave generator (4); and first and second support bearings (7, 9) for supporting the input shaft. The first and second support bearings (7, 9) are respectively mounted to first and second bearing mounting parts (11, 13) in a state of being fit with a clearance. In order to remove backlash of the first and second support bearings (7, 9), outer rings for the first and second support bearings (7, 9) are pushed radially inside by first and second elastic rings (12, 14), respectively. Center misalignment, between the wave generator (4) and the first and second support bearings (7, 9), caused by a load applied from a load side to a second end plate (10) which is an output-side member is absorbed by the elastic deformation of the first and second elastic rings (12, 14), and unnecessary radial force is prevented from being applied to the wave generator (4).

## Description

### TECHNICAL FIELD

The present invention relates to a strain wave gearing provided with an input shaft via which rotation from an external source is inputted to a wave generator, and more specifically, to a mechanism for preventing misalignment of a wave generator in a strain wave gearing in which an Oldham coupling is not provided between an input shaft and the wave generator.

### BACKGROUND ART

A strain wave gearing has three basic constituent elements: a rigid internally toothed gear, a flexible externally toothed gear, and a wave generator that causes the externally toothed gear to flex into an ellipsoidal shape and partially mesh with the internally toothed gear. By causing the wave generator to rotate, the positions where the externally toothed gear meshes with the internally toothed gear move in a circumferential direction, and a relative rotation corresponding to the difference in the number of teeth between the two gears is generated between the two gears. One of the gears is fixed to a fixed-side member such as a device housing so as not to rotate, and reduced rotation is outputted from the other gear.

A known example of a strain wave gearing is configured such that an input shaft is attached to a wave generator, and the input shaft is supported by support bearings at positions on both sides of the wave generator in an axial direction (Patent Documents 1 to 3). One of the support bearings supporting one axial end of the input shaft is mounted to a device housing, which is a fixed-side member, and the other support bearing supporting the other axial end of the input shaft is mounted to an output-side member that outputs reduced rotation. A load-side member to be driven is connected to the output member.

In a strain wave gearing having an input shaft of this configuration, a load such as the weight of the load-side member to be driven is applied to the output-side member. The load applied to the output-side member acts on the support bearing attached to the output-side member. As a result, misalignment may occur between the support bearings and the wave generator connected to the input shaft supported by the support bearings. In the strain wave gearing described in Patent Document 1, the input shaft is connected to the wave generator via an Oldham coupling, and such misalignment is absorbed by the Oldham coupling. If the wave generator is not provided with an Oldham coupling, radial force may be applied to the wave generator due to the misalignment when there is a large load acting from the load side, and the reliability of the strain wave gearing will be compromised.

### PRIOR ART LITERATURE

### PATENT DOCUMENT

Patent Document 1: JP 2014-74450 A
Patent Document 2: JP 5496426 B1
Patent Document 3: JP 2002-21948 A

### DISCLOSURE OF THE INVENTION

### PROBLEMS TO BE SOLVED BY THE INVENTION

In view of these matters, an object of the present invention is to provide a strain wave gearing in which an input shaft is supported by support bearings on both sides of a wave generator, wherein misalignment caused by a load acting from a load side can be absorbed and unnecessary radial force can be prevented from acting on the wave generator, without the use of an Oldham coupling.

### MEANS USED TO SOLVE THE PROBLEMS

A strain wave gearing that is the subject of the present invention comprises
a rigid internally toothed gear, a flexible externally toothed gear, a wave generator, and an input shaft attached to the wave generator,
the input shaft including a first shaft part extending from the wave generator to one axial-direction side and a second shaft part extending to the other axial-direction side,
the first shaft part being rotatably supported by a fixed-side member via a first support bearing, and the second shaft part being rotatably supported by an output-side member that outputs reduced rotation via a second support bearing.

According to the present invention, a strain wave gearing having the above configuration is characterized in that:
the first support bearing is mounted in a loosely fitted state in a first bearing mounting part formed between the first shaft part and the fixed-side member;
a first elastic ring is mounted between an outer ring of the first support bearing and the device housing, the first elastic ring pressing the first support bearing in a radial direction toward the first shaft part;
the second support bearing is mounted in a loosely fitted state in a second bearing mounting part formed between the second shaft part and the output-side member; and
a second elastic ring is mounted between an outer ring of the second support bearing and the output-side member, the second elastic ring pressing the second support bearing in the radial direction toward the second shaft part.

The strain wave gearing of the present invention employs, as a mechanism for preventing misalignment of the wave generator, a mechanism in which the first and second support bearings are fitted into the first and second bearing mounting parts respectively in a loosely fitted state, and the outer rings of the first and second support bearings are pressed inward from the radial direction by first and second elastic rings, made of O-rings or the like, to prevent the first and second support bearings from being unsteady. Misalignment between the support bearings and the wave generator that occurs due to, inter alia, loads applied from the load side are absorbed by elastic deformation of the first and second elastic rings.

It is desirable that the radial-direction gap between the first bearing mounting part and the first support bearing, and the radial-direction gap between the second bearing mounting part and the second support bearing are each set to approximately the same as the amount of misalignment that occurs when a load is applied from the load side. From this perspective, it is desirable to set the gaps to a value within the range of 15 to 500 µm.

### EFFECT OF THE INVENTION

According to the present invention, the misalignment between the support bearings and the wave generator caused by loads acting from the load side can be absorbed without providing an Oldham coupling. It is thereby possible to prevent unnecessary radial force from acting on the wave generator.

### BRIEF DESCRIPTION OF THE DRAWINGS

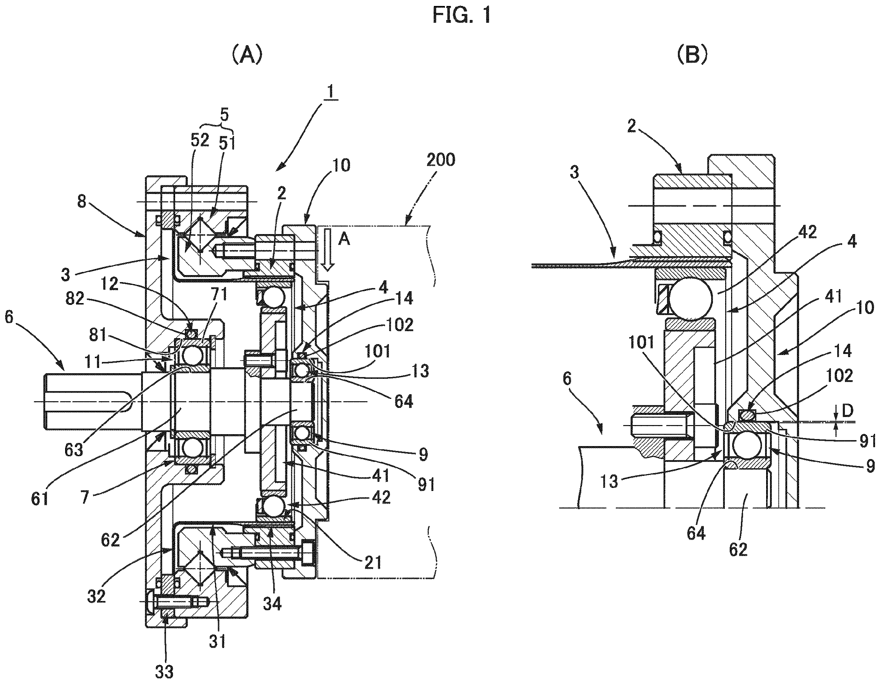

FIG. 1(A) is a schematic longitudinal cross-sectional view of an example of a strain wave gearing to which the present invention is applied; and
FIG. 1(B) is an explanatory drawing of a portion of a support bearing of the strain wave gearing.

### MODE FOR CARRYING OUT THE INVENTION

An example of a strain wave gearing to which the present invention is applied shall be described below with reference to the drawings.

Referring to FIG. 1(A), a strain wave gearing 1 includes a rigid internally toothed gear 2 having a circular ring shape, a flexible externally toothed gear 3 capable of flexing in a radial direction and disposed coaxially inside the internally toothed gear 2, and a wave generator 4 disposed coaxially inside the externally toothed gear 3. The wave generator 4 causes the externally toothed gear 3 to flex into a non-circular shape, in this example an ellipsoidal shape, to partially mesh with the internally toothed gear 2, and causes the meshing positions of the gears 2, 3 to move in a circumferential direction.

The internally toothed gear 2 and the externally toothed gear 3 are supported by a main bearing 5 in a state of being capable of rotating relative to each other, the main bearing 5 being, e.g., a cross roller bearing. An input shaft 6 via which rotation is inputted from a motor or the like (not shown) is coaxially attached to the wave generator 4. The wave generator 4 in this example includes a rigid cam plate 41 and a wave generator bearing 42 mounted to the non-circular outer circumferential surface of the cam plate 41, which in this example is an ellipsoidal outer circumferential surface. The cam plate 41 is fastened and fixed coaxially to the input shaft 6, and the input shaft 6 passes through the cam plate 41 and extends on both sides in the axial direction.

In the input shaft 6, a portion extending from the cam plate 41 of the wave generator 4 to one axial-direction side is referred to as an input-side shaft part 61 (first shaft part), and a portion extending to the other axial-direction side is referred to as a shaft tip part 62 (second shaft part). The input-side shaft part 61 of the input shaft 6 is rotatably supported by a first end plate 8 (fixed-side member) via a first support bearing 7 made of a ball bearing or the like. The shaft tip part 62 of the input shaft 6 is rotatably supported by a second end plate 10 (output-side member that outputs reduced rotation) via a second support bearing 9 made of a ball bearing or the like.

The externally toothed gear 3 is a "top hat" shaped externally toothed gear and includes a cylindrical barrel part 31 capable of flexing in the radial direction, a diaphragm 32 extending radially outward from one end of the cylindrical barrel part 31, an annular boss 33 integrally formed on an outer peripheral edge of the diaphragm 32, and external teeth 34 formed on an outer peripheral surface portion at the side of an opening end, which is the other end of the cylindrical barrel part 31. The wave generator 4 is fitted inside the cylindrical barrel part 31 on which the external teeth 34 are formed. The external teeth 34 of the externally toothed gear 3, which is caused to flex into an ellipsoidal shape by the wave generator 4, mesh with internal teeth 21 of the internally toothed gear 2 at both ends of the major axis of the ellipsoidal shape.

The internally toothed gear 2, the externally toothed gear 3, the wave generator 4, and the main bearing 5 are disposed between the first and second end plates 8, 10. The main bearing 5 is disposed so as to coaxially surround the portion between the external teeth 34 and the diaphragm 32 in the cylindrical barrel part 31 of the externally toothed gear 3. An outer ring 51 of the main bearing 5 is coaxially fixed to the boss 33 of the externally toothed gear 3. In this example, three members, namely, an outer-peripheral-side portion of the first end plate 8, the boss 33, and the outer ring 51, are fastened and fixed by fastening bolts. An inner ring 52 of the main bearing 5 is coaxially fixed to the internally toothed gear 2. In this example, three members, namely, an outer-peripheral-side portion of the second end plate 10, the internally toothed gear 2, and the inner ring 52, are fastened and fixed by fastening bolts.

In the strain wave gearing 1, when the wave generator 4 rotates due to the rotation inputted via the input shaft 6, the positions where the externally toothed gear 3 meshes with the internally toothed gear 2 move in the circumferential direction. Relative rotation reduced in speed at a speed ratio determined by the difference in the number of teeth between the internal teeth 21 and the external teeth 34 occurs between the internally toothed gear 2 and the externally toothed gear 3. In this example, the externally toothed gear 3 attached to the first end plate 8 side is the fixed side, and the internally toothed gear 2 attached to the second end plate 10 side is the rotation side. The reduced rotation generated in the internally toothed gear 2 is outputted via the second end plate 10 to a load-side member 200 shown by imaginary lines in FIG. 1(A).

The wave generator 4 of the strain wave gearing 1 of this example is not provided with an Oldham coupling, and the input shaft 6 and the cam plate 41 of the wave generator 4 are directly connected and fixed. A load (indicated by arrow A in FIG. 1) acting from the load side on the second end plate 10, which is an output-side member, can cause misalignment between the wave generator 4 and the second support bearing 9 attached to the second end plate 10. In order to absorb such misalignment and prevent unnecessary radial force from acting on the wave generator 4, the strain wave gearing 1 is equipped with a misalignment prevention mechanism.

The misalignment prevention mechanism shall now be described. A first bearing mounting part 11, in which the first support bearing 7 is mounted, is formed between a circular outer peripheral surface portion 63 of the input-side shaft part 61 of the input shaft 6 and a circular inner peripheral surface 81 forming an inner peripheral surface of a center hole in the first end plate 8 surrounding the circular outer peripheral surface portion 63 in a coaxial state. The first support bearing 7 is mounted in the first bearing mounting part 11 in a loosely fitted state. In this example, a radial gap between the first bearing mounting part 11 and the first support bearing 7 is set to a value within a range of 15 to 500 µm. A first elastic ring 12 is mounted between an outer ring 71 of the first support bearing 7 and the circular inner peripheral surface 81 of the first end plate 8 facing the outer ring 71. In this example, a circular-ring mounting groove 82 with a rectangular cross section that opens radially inward is formed in the circular inner peripheral surface 81 facing the outer ring 71, and an O-ring is mounted in this groove as the first elastic ring 12. The first elastic ring 12 is mounted in the mounting groove 82 in a state of being crushed in the radial direction by a circular outer peripheral surface of the outer ring 71. A state where the outer ring 71 is pressed inward in the radial direction is produced by the elastic restoring force of the first elastic ring 12, thereby preventing unsteadiness of the first support bearing 7.

The other first support bearing 7 is similarly configured. Referring to FIG. 1B, a second bearing mounting part 13 for mounting the second support bearing 9 is formed between a circular outer peripheral surface portion 64 of the shaft tip part 62 of the input shaft 6 and a circular inner peripheral surface 101 of a circular recess of the second end plate 10 that coaxially surrounds the circular outer peripheral surface portion 64. The second support bearing 9 is mounted in a loosely fitted state in the second bearing mounting part 13. In this example, a radial gap D between the second bearing mounting part 13 and the second support bearing 9 is set to a value within the range of 15 to 500 µm. A second elastic ring 14 is mounted between an outer ring 91 of the second support bearing 9 and the circular inner peripheral surface 101 of the second end plate 10 that faces the outer ring 91. In this example, a circular mounting groove 102 with a rectangular cross section that opens radially inward is formed in the circular inner peripheral surface 101 facing the outer ring 91, and the second elastic ring 14, an O-ring in this example, is mounted in this groove. The second elastic ring 14 is mounted in the mounting groove 102 in a state of being crushed in the radial direction by a circular outer peripheral surface of the outer ring 91. A state where the outer ring 91 is pressed radially inward is created by an elastic restoring force of the second elastic ring 14, thereby preventing unsteadiness of the second support bearing 9.

As described above, instead of using an Oldham coupling, the strain wave gearing 1 employs, as a mechanism for preventing misalignment of the wave generator 4, a mechanism in which the first and second support bearings 7, 9 are fitted into the first and second bearing mounting parts 11, 13 in a loosely fitted state, and the outer rings of the first and second support bearings 7, 9 are pressed radially inward by the first and second elastic rings 12, 14 to prevent the first and second support bearings 7, 9 from becoming unsteady. Misalignment between the wave generator 4 and the first and second support bearings 7, 9 caused by, inter alia, a load acting from the load side on the second end plate 10, which is an output-side member, is absorbed by the elastic deformation of the first and second elastic rings 12, 14. This makes it possible to prevent unnecessary radial force from acting on the wave generator 4, and maintain the reliability of the operation of the strain wave gearing 1.

### (Other embodiments)

The present invention can be applied to a strain wave gearing in which an input shaft is supported by support bearings on both sides of a wave generator, the wave generator is connected to the input shaft without an Oldham coupling, and one of the support bearings is supported by an output-side member to which a load from a load side is applied. Therefore, the present invention can be applied not only to the top-hat type strain wave gearing 1 including the top-hat shaped externally toothed gear 3 described above, but also to a cup-type strain wave gearing equipped with a cup-shaped externally toothed gear. The present invention can also be applied to a flat type strain wave gearing in which a pair of rigid internally toothed gears mesh with one cylindrical externally toothed gear.

## Claims

1. A strain wave gearing comprising:
a rigid internally toothed gear, a flexible externally toothed gear, a wave generator, and an input shaft attached to the wave generator;
the input shaft including a first shaft part and a second shaft part sandwiching the wave generator, the first shaft part being located at one axial-direction side of the wave generator, and the second shaft part being located at the other axial-direction side thereof; and,
the first shaft part being rotatably supported by a fixed-side member, via a first support bearing, and the second shaft part being rotatably supported by an output-side member that outputs reduced rotation, via a second support bearing,
the strain wave gearing being **characterized in that**:
the first support bearing is mounted in a loosely fitted state in a first bearing mounting part formed between the first shaft part and the fixed-side member;
a first elastic ring is mounted between an outer ring of the first support bearing and the fixed-side member, the first elastic ring pressing the first support bearing in a radial direction toward the first shaft part;
the second support bearing is mounted in a loosely fitted state in a second bearing mounting part formed between the second shaft part and the output-side member; and
a second elastic ring is mounted between an outer ring of the second support bearing and the output-side member, the second elastic ring pressing the second support bearing in the radial direction toward the second shaft part.

2. The strain wave gearing according to claim 1, wherein
a radial-direction gap between the first bearing mounting part and the first support bearing, and a radial-direction gap between the second bearing mounting part and the second support bearing are each set to a value within the range of 15 to 500 µm.

## Amended claims

### Amended claims in accordance with Rule 137(2) EPC.

1. A strain wave gearing comprising:
a rigid internally toothed gear, a flexible externally toothed gear, a wave generator, and an input shaft attached to the wave generator;
the input shaft including a first shaft part and a second shaft part sandwiching the wave generator, the first shaft part being located at one axial-direction side of the wave generator, and the second shaft part being located at the other axial-direction side thereof; and,
the first shaft part being rotatably supported by a fixed-side member, via a first support bearing, and the second shaft part being rotatably supported by an output-side member that outputs reduced rotation, via a second support bearing,
the strain wave gearing being **characterized in that**:
the first support bearing is mounted in a loosely fitted state in a first bearing mounting part formed between the first shaft part and the fixed-side member;
a first elastic ring is mounted between an outer ring of the first support bearing and the fixed-side member, the first elastic ring pressing the first support bearing in a radial direction toward the first shaft part;
the second support bearing is mounted in a loosely fitted state in a second bearing mounting part formed between the second shaft part and the output-side member;
a second elastic ring is mounted between an outer ring of the second support bearing and the output-side member, the second elastic ring pressing the second support bearing in the radial direction toward the second shaft part;
the fixed-side member is provided with: a first circular inner peripheral surface facing a circular outer peripheral surface of the outer ring of the first support bearing; and a first mounting groove that opens radially inward and is formed in the first circular inner peripheral surface, the first elastic ring being mounted in the first mounting groove in a state of being crushed in the radial direction by the circular outer peripheral surface of the outer ring of the first support bearing; and
the output-side member is provided with: a second circular inner peripheral surface facing the circular outer peripheral surface of the outer ring of the second support bearing; and a second mounting groove that opens radially inward and is formed in the second circular inner peripheral surface, the second elastic ring being mounted in the second mounting groove in a state of being crushed in the radial direction by the circular outer peripheral surface of the outer ring of the second support bearing.

2. The strain wave gearing according to claim 1, wherein
a radial-direction gap between the first bearing mounting part and the first support bearing, and a radial-direction gap between the second bearing mounting part and the second support bearing are each set to a value within the range of 15 to 500 µm.
